# EUROPÄISCHE PATENTANMELDUNG

(11) **EP 4 155 930 A1**
(43) Veröffentlichungstag der Anmeldung: **29.03.2023**
(21) Anmeldenummer: 21199159.1
(22) Anmeldetag: 27.09.2021
(51) Int. Cl.: G06F 9/50, G06F 8/60

(54) **VERFAHREN ZUM BETREIBEN EINER KONTROLLANORDNUNG FÜR EIN ENERGIENETZ UND KONTROLLANORDNUNG**

(71) Anmelder: Siemens Aktiengesellschaft, 80333 München (DE)
(72) Erfinder: Apel, Rolf, 90461 Nürnberg (DE); Dauß, Torsten, 90480 Nürnberg (DE)
(74) Vertreter: Siemens Patent Attorneys

(57) **Zusammenfassung**

Gegenstand der vorliegenden Erfindung ist ein Verfahren zum Betreiben einer Kontrollanordnung für ein Energienetz mit den Schritten:
- Bereitstellen einer Cloud-Infrastruktur mit Datenprozessorressourcen und Datenspeicherressourcen für die Kontrollanordnung, und
- Bereitstellen einer ersten Gruppe von Softwaremodulen zur Ausführung auf der Cloud-Infrastruktur,
gekennzeichnet durch die Schritte:
- Bereitstellen einer zweiten Gruppe von Softwaremodulen zur lokalen Ausführung auf einer Server-Computeranordnung,
- Verbinden der ersten Gruppe und der zweiten Gruppe mittels Datenkommunikation über Schnittstellen, wobei die Schnittstellen eine Public-Key-Infrastruktur (PKI) zur Verschlüsselung einsetzen.

Ferner ist Gegenstand der Erfindung eine entsprechende Kontrollanordnung.

## Beschreibung

Die Erfindung betrifft ein Verfahren zum Betreiben einer Kontrollanordnung für ein Energienetz nach dem Oberbegriff des Anspruchs 1 sowie eine Kontrollanordnung nach dem Oberbegriff des Anspruchs 10.

Energienetze für elektrische Energie, Gasnetze oder auch Wasserverteilungsnetze müssen mittels eines Netzleitsystems, üblicherweise in einer Netzleitstelle angeordnet, gemanagt werden. Elektrische Energienetze müssen aufgrund der zunehmenden Nutzung von erneuerbaren Energien wie z.B. Windkraftanlagen oder Photovoltaikanlagen ständig flexibler und leichter wartbar oder ausbaubar werden. Darüber hinaus erfordert die sognannte Sektorkopplung mehr und mehr Schnittstellen zwischen den bisher oftmals getrennt gemanagten Energienetzen für z.B. Wärme und Gas.

Die erste Generation von Netzleitsystemsoftware für die Netzleitstelle wurde in den 1970er Jahren entwickelt. Sie nutzt speziell für diese Anwendung konfigurierte Server-Computer, die im Computerraum der Leitstelle des Netzbetreibers vor Ort installiert wurden. Dabei wurden die Server-Computer typischerweise redundant ausgeführt, um eine Verfügbarkeit der Netzleitsystemfunktionalität von mehr als 99,999 % der Zeit sicherzustellen. Teilweise werden auch heutzutage die redundanten Server-Computer an unterschiedlichen Orten installiert, um das Gesamtsystem noch resistenter zu gestalten und z.B. auch Katastrophen wie Erdbeben oder Feuer an einem Ort noch eine Leitstellenfunktionalität durch die Server-Computer am anderen Ort sicherzustellen.

Inzwischen ist für viele Softwareanwendungen eine Cloud-Softwarearchitektur eingeführt worden. Dabei handelt es sich im Sinne der Erfindung um ggf. räumlich verteilte Datenprozessor- und Datenspeichereinrichtungen, die mittels eines Datenkommunikationsnetzwerks wie z.B. dem Internet verbunden sind. Software kann dabei modulweise als sog. Cloud-Applikation dort ausgeführt werden, wo gerade ausreichende Datenprozessor- und/oder Datenspeicherressourcen zur Verfügung stehen. Dies gewährleistet eine hohe Skalierbarkeit und Verfügbarkeit. Zudem entfällt für viele Unternehmen im Wesentlichen die Notwendigkeit, eigene Server-Computer bzw. Hardware im großen Umfang zu betreiben, zu warten und gegen Hackerangriffe zu schützen. Darüber hinaus müssen Netzleitsystem so dimensioniert sein, dass sie extrem große Datenmengen, wie sie z.B. bei Störungen im Energienetz entstehen, ohne Datenverlust verarbeiten können. Das bedeutet, dass die Rechenressourcen im Normalbetrieb nur zu einem Teil ausgelastet sind, was sowohl ökonomisch als auch ökologisch ineffizient ist.

Aus der Druckschrift US 10990068 B2 ist ein Ansatz bekannt, um eine existierende Leitstellensoftware in einer Cloud auszuführen, wobei ein sog. "Lift and Shift" Ansatz verfolgt wird. Dies bedeutet, dass eine Kopie der lauffähigen Software sowie die benötigen Datenbanken mit nur minimalen oder gar keinen Anpassungen in eine Cloud eines Drittanbieters eingespielt wird. Beispielswiese kann die Kopie der Software auf einer sog. "virtual machine", d.h. auf einem virtuell als abgekapselte Software nachgebildeten Rechner innerhalb eines realen bzw. physischen Rechnersystems, eingesetzt werden. Die "virtual machine" kann z.B. per sog. "virtual private network" (VPN) mit den Arbeitscomputern und Anzeigetafeln für die Techniker im Leistellenraum des Netzbetreibers verbunden werden.

Ausgehend von bisherigen Verfahren zum Betreiben einer Kontrollanordnung für ein Energienetz stellt sich an die Erfindung die Aufgabe, ein Verfahren zum Betreiben einer Kontrollanordnung für ein Energienetz anzugeben, mit dem eine vergleichsweise noch größere Verfügbarkeit, eine hohe Sicherheit gegenüber Manipulationen und eine effiziente Nutzung von Datenverarbeitungsressourcen erreicht wird.

Die Erfindung löst diese Aufgabe durch ein Verfahren gemäß Anspruch 1.

Eine Kontrollanordnung für ein Energienetz ist im Sinne der Erfindung ein Netzwerk von per Datenkommunikation verbundenen Computern, die eine Leitstellensoftware betreiben, mit der Messdaten und Schaltzustände des Energienetzes empfangen, weiterverarbeiten und daraus abgeleitete Steuerbefehle für steuerbare Betriebsmittel wie Schaltanlagen, Stufenschalter von Transformatoren, Netzregler, steuerbare elektrische Energieverbraucher, steuerbare Produzenten elektrischer Energie, Kondensatorbänke, usw. gesendet werden. Auf diese Weise wird das Energienetz überwacht und kontrolliert, um z.B. die Netzspannung und die Netzfrequenz in den erlaubten Grenzen zu halten.

Ein Energienetz ist z.B. ein elektrisches Energieversorgungsnetz der Niederspannungsebene auf, das eine Nennspannung von unter 1kV aufweist. Das Energieversorgungsnetz der Niederspannungsebene ist z.B. über einen Transformator an ein Mittelspannungsnetz mit einer Nennspannung zwischen 1 kV und 52 kV angebunden, das wiederrum an ein Hochspannungsnetz zur Energieübertragung mit einer Nennspannung von über 52 kV angebunden ist.

Eine Cloud-Infrastruktur ist z.B. ein Verbund mehrerer Rechenzentren, die jeweils eine große Anzahl von leistungsfähigen Computern aufweist. Die Computer sind mit Datenprozessorressourcen wie z.B. "Central Processing Units" (CPUs) und/oder "Graphics Processing Units" (GPUs) ausgerüstet. Ferner sind Datenspeicherressourcen wie z.B. "Solid state disks" (SSDs) oder Magnetfestplatten vorgesehen.

Eine Server-Computeranordnung, die lokal in der Netzleitstelle eines Netzbetreibers angesiedelt ist, verfügt dabei z.B. über vergleichbare Datenspeicher- und Datenprozessorressourcen wie eingangs für die Cloud-Infrastruktur erläutert.

Die Grundidee der Erfindung ist es, eine Leitstellensoftware als Teil einer Kontrollanordnung zumindest teilweise in eine Cloud-Softwarearchitektur zu überführen, wobei die einzelnen Module der Leistellensoftware wie z.B. eine Netzzustandsschätzungseinrichtung oder eine Spannungs-Blindleistungskontrolle (Volt Var Control - WC) mittels sog. "Microservices" in der Cloud gehostet sind.

Microservices im Sinne der Erfindung sind Softwaremodule, die einzelne unabhängige Prozesse der Datenverarbeitung einer komplexen Software-Anwendung abbilden und untereinander mittels Schnittstellen kommunizieren. Die einzelnen Softwaremodule können jeweils einen Teilaspekt der komplexen Software-Anwendung umsetzen und sind im Wesentlichen von den anderen Softwaremodulen entkoppelt. Ein Softwaremodul bzw. Microservice im Sinne der Erfindung umfasst z.B. einen ausführbaren Programmcode in einer beliebigen Programmiersprache. Ein Vorteil ist, dass durch diese extrem granulare Architektur vergleichsweise einfach Sicherheitsupdates oder Anpassungen des jeweiligen Softwaremoduls eingespielt werden können, da aufgrund der Schnittstellen nur wenige Wechselwirkungen mit anderen Softwaremodulen berücksichtigt werden müssen. Dies erhöht die Betriebssicherheit und spart laufende Kosten ein.

Durch eine Microservices-basierte Softwarearchitektur können innerhalb der Leitstellensoftware verschiedene Implementations-Paradigmen und Programmiersprachen wie "C" oder Java einfach kombiniert werden, da jeder Microservice nur über die Schnittstellen mit anderen Microservices interagiert. Dies ermöglicht eine schrittweise Übertragung ("lazy migration") einzelner Softwarebestandteile eines bestehenden Leitstellensystems in eine hybride Cloud-Softwarearchitektur, d.h. unter Nutzung sowohl lokaler Rechnerkapazitäten als auch zentral gehosteter Rechnerkapazitäten.

Eine Schnittstelle weist z.B. eine Kommunikationseinrichtung auf, die per TCP/IP und per PKI verschlüsselt Daten mit einer anderen Kommunikationseinrichtung austauschen kann. Als Übertragungsmedium können z.B. leitungsgebundene Verbindungen über Kupferkabel oder Glasfaser, Powerline Communication Verbindungen über eine Stromleitung, Funkverbindungen nach dem 2G,3G,4G,5G oder long range radio standard eingesetzt werden.

Datenkommunikation im Sinne der Erfindung ist z.B. das Senden und Empfangen von digitalen Nachrichten, d.h. Bitfolgen.

Das beschriebene Verfahren ist ein computer-implementiertes Verfahren, d.h. es nutzt Softwaremodule bzw. Softwareapplikationen u.A. auf der Cloud-Infrastruktur, teilweise aber auch lokal auf Computern in der Netzleitstelle.

Beispielsweise können für die Softwaremodule der ersten Gruppe komplexe Berechnungsverfahren vorgesehen werden, die innerhalb der Cloud einfach und rasch auf die benötigte Rechenleistung skaliert werden können. Dies können z.B. Softwaremodule zur Schätzung des aktuellen Netzzustands und/oder zur Prognose eines zukünftigen Netzzustands per Simulationsverfahren sein.

Die zweite Gruppe von Softwaremodulen, die vor Ort beim Netzbetreiber in dessen Leitstelle betrieben und dort von Leitstellentechnikern bedient werden, kann z.B. zeitkritischere Funktionalitäten wie die Anzeige von Alarmen, Messdaten, Schaltzuständen und Netzzuständen in einer geographischen Darstellung des Netzgebietes, oder einer schematischen Darstellung einzelner Schaltanlagen umfassen. Dies ist ein Vorteil, denn eine Cloud kann zu höheren Latenzen in der Datenübertragung führen als dies bei einer lokalen Serveranordnung der Fall ist. Dies bedeutet, dass z.B. beim Betrieb eine Benutzeroberfläche ("User interface") mittels einer Cloud ein trägeres, also verlangsamtes, Ansprechverhalten der Benutzeroberfläche auftritt. Dies kann weitestehend vermieden werden, wenn die Benutzeroberfläche, die für ihre graphischer Darstellung eine hohe Performance beim Verändern bzw. Aktualisieren benötigt, z.B. zwar ihre Datenbasis in der Cloud findet, aktuelle Daten aber lokal speichert.

Besonders bevorzugt ist es, wenn Messdaten zu Spannung, Stromstärke und Zeigermessdaten von verschiedenen Messpunkten im Energienetz sowie Schaltzustände für eine langfristige Datenspeicherung vor Ort in Datenspeicherressourcen gespeichert werden. Dies ist für viele Netzbetreiber eine wichtige Anforderung an ein Kontrollsystem, denn es dürfen unter keinen Umständen die aktuellen Messdaten und aktuellen Schaltzustände verloren gehen. Nur so kann ein Kontrollsystem bei Störungen schnell reagieren und anschließend die Störungsursache durch Analyse der aufgezeichneten Informationen ermittelt werden. Mit anderen Worten darf es keinen Datenverlust geben. Dies wird z.B. dadurch sichergestellt, dass die lokalen Datenspeicherressourcen redundant in der Cloud gespiegelt werden. Darüber hinaus ermöglicht die Cloudtechnologie auch eine kosteneffizienter Langzeitspeicherung der Daten im Vergleich zu einer Datenspeicherung vor Ort.

Ein weiterer Aspekt ist es, dass eine hybride Kontrollanordnung die Möglichkeit bietet, an die lokale Installation Feldgeräte, Messgeräte, Schalteinrichtungen, Schutzgeräte, usw. anzuschließen, die bauartbedingt über keine Möglichkeit einer direkten Kommunikation per TCP/IP zur in der Cloud gehosteten Funktionalität haben. Hinzu kommt, dass Cloud-Anbieter, d.h. Betreiber einer Cloud-Infrastruktur, i.d.R. Gebühren für die Nutzung der Cloud erheben, die u.A. von der Anzahl und dem Umfang von Input/Output Operationen abhängen. D.h., umso mehr Datenaustauschprozesse zwischen der Server-Computeranordnung und der Cloud-Infrastruktur gleichzeitig ausgeführt werden, umso teurer ist die Nutzung der Cloud für das Anbieter des Netzleitsystems. Arbeiten beispielsweise zwei Leistellentechniker an zwei unterschiedlichen Workstations und benötigen beide eine aktualisierte Bedienoberfläche der Software, so ergeben sich hohe Kosten für die doppelte Abfrage der dafür nötigen Daten aus der Cloud. Werden die für die Aktualisierung der Bedienoberfläche nötigen Daten jedoch lokal in der Server-Computeranordnung gehostet, so müssen ggf. weniger Daten aus der Cloud abgefragt werden, was Kosten einspart.

Eine Public-Key-Infrastruktur (PKI) ist im Sinne der Erfindung z.B. ein System, das digitale Zertifikate ausstellen, verteilen und prüfen kann. Die innerhalb einer PKI ausgestellten Zertifikate werden zur Absicherung der Datenkommunikation zwischen den Softwaremodulen bzw. Microservices verwendet. Insbesondere für regulatorische Anforderungen in Bezug auf den Datenschutz in manchen Ländern ist es von Vorteil, eine hybride Kontrollanordnung mit verteilter Leitellensoftware einzusetzen, so dass ein Teil der Funktionalität lokal in der Leitstelle des Netzbetreibers und ein anderer Teil der Funktionalität zentral in einer Cloud angeboten wird. In einem solchen Fall kann der Datenaustausch zwischen den lokalen und den Cloud-Installationen per PKI, auf Applikationsebene Ende-zu-Ende verschlüsselt, durchgeführt werden. Gegenüber einer VPN Kommunikation hat dies den Vorteil, dass nicht sämtliche Kommunikation zwischen der Cloud und der Netzleitstelle mit ein und demselben Code verschlüsselt werden, sondern dass jede logische Verbindung zwischen zwei Applikationen einen eigenen Verschlüsselungscode benutzt.

In einer Weiterbildung kann die PKI-Verschlüsselung zwischen allen Softwaremodulen eingesetzt werden. Dies ermöglicht es, sogar den Cloud-internen Datenaustausch zwischen Microservices (d.h. z.B. im "local area network" (LAN) des Rechenzentrums) zu verschlüsseln und damit die Datensicherheit gegenüber Manipulationen weiter zu verbessern. Dies ist ein wesentlicher Vorteil gegenüber bisherigen Systemen, die z.B. eine Datenkommunikation per sog. "virtual private network" (VPN) nutzen, da bei diesem System die Kommunikation innerhalb der Cloud nicht geschützt ist.

Die Erfindung hat gegenüber dem eingangs erwähnten "lift and shift" Ansatz viele Vorteile. Beim "lift and shift" Ansatz wird spezifische Computer-Hardware wie z.B. Server-Computer oder Festplatten einfach durch eine sog. "virtual machine" ersetzt, die in einem Cloud-Rechenzentrum läuft und spezielle Router für eine geschützte Datenkommunikation über ein sog. "Wide Area Network" (WAN) zur lokalen Leitstelle nutzt. Damit müssen zwar einerseits keine größeren Anpassungen an bestehender Software durchgeführt werden, es können aber andererseits auch die Vorteile einer Cloud-Softwarearchitektur nicht voll genutzt werden. Insbesondere muss für ein Skalieren eine komplexe manuelle Konfiguration der Software vorgenommen werden, um die eigentlich "monolithische" Leitstellensoftware auf einer größeren Anzahl von virtuellen Maschinen lauffähig zu machen und diese dann gemäß den Anforderungen eines "Worst Case" Szenarios zu dimensionieren.

In einer bevorzugten Ausführungsform des erfindungsgemäßen Verfahrens werden mittels der Kontrollanordnung Messdaten und/oder Schaltzustände von Messeinrichtungen und/oder Betriebsmitteln empfangen. Beispielsweise kann es sich bei den Messdaten um Spannungswerte, Stromwerte oder Zeigermessdaten handeln. Bei den Messeinrichtungen kann es sich z.B. um Spannungsmesseinrichtungen, Strommesseinrichtungen oder Phasor measurement units (PMUs) handeln. Betriebsmittel im Sinne der Erfindung können z.B. sein: Schutzgeräte, remote terminal units (RTUs), Transformatoren mit Stufenschalter, Schaltanlagen, Netzregler, Kondensatorbänke, Erzeuger elektrischer Energie und Verbraucher elektrischer Energie.

In einer bevorzugten Ausführungsform des erfindungsgemäßen Verfahrens werden mittels der Kontrollanordnung Steuerfehle erstellt und an steuerbare Betriebsmittel im Energienetz gesendet. Bei den steuerbaren Betriebsmitteln handelt es sich z.B. um Schutzgeräte, Transformatoren mit Stufenschalter, Schaltanlagen, Netzregler, Kondensatorbänke, Erzeuger elektrischer Energie und Verbraucher elektrischer Energie. Die Steuerbefehle können z.B. das Öffnen oder Schließen eines Schalters anweisen oder das Ein- oder Ausschalten einer Kondensatorbank beinhalten. Auf diese Weise kann mittels der Kontrollanordnung das Energienetz in einem betriebsbereiten Zustand gehalten werden, da Spannungs- oder Frequenzabweichungen entgegengewirkt wird, Betriebsmittelüberlastungen vermieden werden und die Netzstabilität sichergestellt wird.

In einer weiteren bevorzugten Ausführungsform des erfindungsgemäßen Verfahrens wird für die Softwaremodule mindestens eines der folgenden Software-Module verwendet: Datenerfassungsmodul, Datenaustauschmodul mit anderen Leitstellen, Überwachungs- und Kontrollmodul, Archivierungsmodul, Berechnungsmodul für analytische Funktionen, Zustandsschätzungsmodul für einen aktuellen Netzzustand, Zustandsschätzungsmodul für einen zukünftigen Netzzustand. Bei dem Überwachungs- und Kontrollmodul kann es sich z.B. um die "Supervisory Control and Data Acquisition" (SCADA) Funktionalität handeln, mittels der Messdaten und Schaltzustände aus dem Energienetz in der Leistelle dargestellt und Steuerbefehle an steuerbare Betriebsmittel wie Schalteinrichtungen oder Stufenschalter für Transformatoren erstellt werden.

In einer weiteren bevorzugten Ausführungsform des erfindungsgemäßen Verfahrens erfolgt mittels eines Konfigurationsmoduls eine Auswahl von Softwaremodulen aus einer Datenbank mit Softwaremodulen. Dies ist ein Vorteil, weil auf diese Weise durch einen Benutzer einfach und schnell eine Leitstellensoftware an die Anforderungen eines Kunden bzw. Netzbetreibers angepasst werden kann. Dies ist wesentlicher unkomplizierter als eine kundenspezifische Anpassung, wie sie bisher bei komplexer Leitstellensoftware erforderlich ist.

In einer weiteren bevorzugten Ausführungsform des erfindungsgemäßen Verfahrens erfolgt mittels des Konfigurationsmoduls eine Zuordnung der ausgewählten Softwaremodule zur ersten oder zur zweiten Gruppe. Dies ermöglicht es z.B. auf sehr einfache Weise, Softwaremodule zur Datensammlung und Vorverarbeitung lokal in einer Leitstelle eines Betreibers ("on premise") vorzusehen. Die dort vorhandenen Server-Computer können mittels unterschiedlichster Kommunikationskanäle mit Feldgeräten, Schaltern, usw. verbunden werden. Es können z.B. Powerline Communication Verbindungen über eine Stromleitung, Funkverbindungen nach dem 2G,3G,4G,5G oder long range radio Standard oder optische Verbindungen mit Lichtwellenleitern eingesetzt werden. Kommunikationsverbinden können mittels des Konfigurationsmoduls z.B. automatisiert festgelegt und parametriert werden.

In einer weiteren bevorzugten Ausführungsform des erfindungsgemäßen Verfahrens wird mittels des Konfigurationsmoduls eine visuelle Darstellung der Softwaremodule aus der Datenbank zur Auswahl präsentiert. Dies ist ein Vorteil, weil z.B. eine symbolhafte Darstellung gewählt werden kann, bei dem jedes Softwaremodul als ein Objekt wie etwa ein Rechteck mit einer Beschriftung dargestellt wird. Der Benutzer kann dann die gewünschten Module einfach per Mausklick an die gewünschte Position (lokal oder zentral) ziehen und mit anderen Softwaremodulen über eine Schnittstelle verknüpfen. Dieser "what-you-see-is-what-you-get"(WYSIWYG) Ansatz ist sehr intuitiv bedienbar.

In einer weiteren bevorzugten Ausführungsform des erfindungsgemäßen Verfahrens werden innerhalb der Cloud-Infrastruktur Datenprozessorressourcen und Datenspeicherressourcen an mindestens zwei unterschiedlichen Orten bereitgestellt, so dass im Fall einer Störung des Betriebs der Datenprozessorressourcen und Datenspeicherressourcen an einem Ort ein ausfallfreier Betrieb der Kontrollanordnung an einem anderen Ort sichergestellt ist. Dieses Konzept einer eingebauten Redundanz wird im Cloud-Kontext häufig als "Cloud Availability Zones" bezeichnet. Es können beispielsweise zwischen Rechenzentren in zwei unterschiedlichen Städten Teil der Cloud-Infrastruktur sein, so dass im Notfall sämtliche für den Betrieb der Kontrollanordnung nötigen Softwaremodule in einem Rechenzentrum verarbeitet werden können, wenn das andere Rechenzentrum z.B. durch einen Hackerangriff, eine Überschwemmung, ein Feuer, ein Erdbeben oder durch einen Ausfall der elektrischen Energieversorgung oder der Datenkommunikationsverbindungen nicht betriebsbereit ist.

In einer weiteren bevorzugten Ausführungsform des erfindungsgemäßen Verfahrens wird mittels eines Rechenlast-Softwaremoduls eine benötigte Rechenleistung und/oder ein benötigter Datenspeicherplatz für einen zukünftigen Zeitpunkt geschätzt, und anhand der Schätzung werden zusätzliche Kopien von Softwaremodulen in der Cloud-Infrastruktur in Betrieb genommen. Dieses Konzept einer eingebauten Redundanz wird im Cloud-Kontext häufig als "Scaling Out" bezeichnet. Es kann beispielsweise aufgrund zunehmender Zuschaltung von Energieerzeugern der erneuerbaren Energien (Windkraft, Photovoltaik) auf der Mittelspannungs- und Niederspannungsebene einer erhöhter Rechenbedarf für eine Zustandsschätzung oder eine VVC im Energienetz innerhalb der nächsten vier Wochen absehbar sein. Entsprechend kann schnell eine Kopie bzw. weitere Instanz eines Softwaremoduls zur parallelen Datenverarbeitung eingeschaltet werden. Prinzipiell können weitere Instanzen bereits konfigurierter Softwaremodule jedoch auch innerhalb von Sekunden in Betrieb gesetzt werden, wenn dies die Situation erfordert. Dies kann z.B. beim Herannahen eine Schlechtwetterfront der Fall sein, wenn durch Blitzeinschläge mit erhöhtem Auftreten von Störungsmeldungen zu rechnen ist.

Ein weiteres Anwendungsbeispiel für ein scaling out ist es, wenn regelmäßig vorkommende Aufgaben, die eine großen Rechenleistung und/oder Rechenzeit erfordern, in der Cloud ausgeführt werden, wobei für die Dauer der Berechnung zusätzlicher Datenprozessorressourcen und/oder Datenspeicherressourcen vom Cloud-Betreiber zugebucht werden. Beispielsweise müssen Berechnungen für einen sog. "day ahead congestion forecast" jeden Tag um 17 Uhr durchgeführt werden. In diesem Zusammenhang ist es sinnvoll, nur täglich von 17 Uhr an für die erwartete Dauer der Berechnung zusätzliche Ressourcen zuzubuchen. Durch diesen Ansatz kann es vermieden werden, in einer lokalen Leitstelle eine für diese Spitzenrechenlast ausgelegte Rechnerinfrastruktur vorzuhalten, die selten voll genutzt wird. Es können auf diese Weise Kosten eingespart werden.

In einer weiteren bevorzugten Ausführungsform des erfindungsgemäßen Verfahrens wird für die Kontrollanordnung mindestens ein zusätzliches Softwaremodul zum Betreiben eines der folgenden Netze vorgesehen: Gas-Verteilnetz, Wasser-Verteilnetz, Abwassersystem, Stadtteil-Wärmenetz, Stadteil-Kühlungsnetz. Dies ist ein Vorteil, weil eine Sektorenkoppelung z.B. zwischen einem Energieverteilungsnetz und einem Fernwärmenetz einfach umsetzbar ist. Damit kann z.B. eine Gesamtoptimierung im Hinblick auf Kosten und/oder einen CO₂ - Ausstoß erreicht werden.

In einer weiteren bevorzugten Ausführungsform des erfindungsgemäßen Verfahrens betreibt die Cloud-Infrastruktur mehrere voneinander getrennte Anwendergruppen von Softwaremodulen gleichzeitig, wobei alle Daten einer Anwendergruppe mittels Verschlüsselung unzugänglich für Softwaremodule aller anderen Anwendergruppen verwahrt werden. Diese Vorgehensweise wird auch als "multi-tenancy" bezeichnet, d.h. dass mehrere Netzbetreiber gleichzeitig innerhalb einer Cloud-Lösung bedient werden können. Dabei wird sichergestellt, dass Daten wie aktuelle und historische Messwerte, aktuelle und historische Schaltzustände und Netzzustände usw. nur dem berechtigten Benutzer zur Verfügung gestellt werden und es zu keiner Vermischung der Betriebsdaten verschiedener Netzbetreiber kommt.

Ausgehend von einer bisherigen Kontrollanordnung für ein Energienetz stellt sich an die Erfindung die Aufgabe, eine Kontrollanordnung für ein Energienetz anzugeben, mit der eine vergleichsweise noch größere Verfügbarkeit, eine hohe Sicherheit gegenüber Manipulationen und eine effiziente Nutzung von Datenverarbeitungsressourcen erreicht wird.

Die Erfindung löst diese Aufgabe durch eine Kontrollanordnung gemäß Anspruch 10. Bevorzugte Ausführungsformen ergeben sich aus den abhängigen Ansprüchen 11 bis 15. Es ergeben sich dabei sinngemäß die gleichen Vorteile wie eingangs für das erfindungsgemäße Verfahren erläutert.

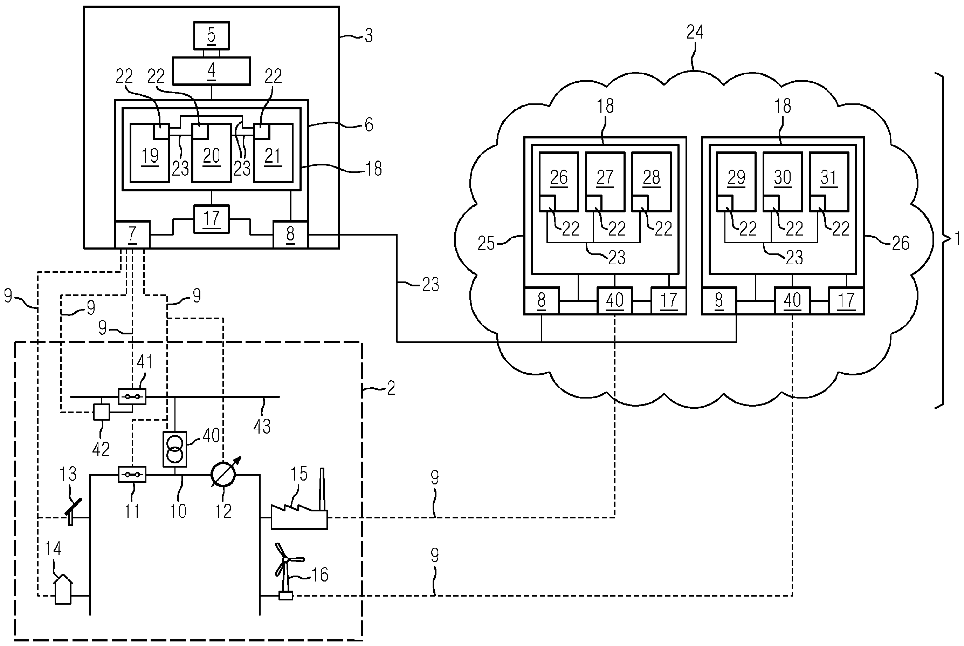

Zur besseren Erläuterung der Erfindung zeigt die Figur in schematischer Darstellung ein Ausführungsbeispiel für eine erfindungsgemäße Kontrollanordnung 1.

Die Figur zeigt ein elektrisches Energienetz 2 mit einer Niederspannungsebene 10, die über einen Transformator 40 mit einer Mittelspannungsebene 43 verbunden ist.

Die Niederspannungsebene 10 weist ein Haus 14 als sog. "Prosumer" (d.h. eine Einheit, die sowohl als Energieerzeuger als auch Energieverbraucher tätig wird), eine Photovoltaikanlage 13, eine Schalteinrichtung 11 und eine Spannungsmesseinrichtung 12, die per Datenkommunikationsverbindungen 9 mit einer ersten Kommunikationseinrichtung 7 einer lokalen Leitstelle 3 des Netzbetreibers verbunden sind. Diese Datenkommunikationsverbindungen 9 zur lokalen Leitstelle sind bevorzugt redundant ausgeführt (nicht dargestellt).

Eine Produktionsanlage 15 und eine Windkraftanlage 16 sind per Datenkommunikationsverbindungen 9 direkt an die Cloud-Infrastruktur angebunden. Insbesondere auch der Niederspannungsebene 10 ist es sehr sinnvoll, Messpunkte und steuerbare Einheiten direkt an die Cloud-Infrastruktur anzubinden. Dies kann z.B. per TCP/IP und/oder eine der eingangs erläuterten Funktechnologien erfolgen. Da in der Zukunft auch die Niederspannungsebene mit vielen Messeinrichtungen und steuerbaren Erzeugern wie Verbrauchern ausgestattet werden soll, können durch die direkte Anbindung große Aufwände für das Anschließen an die Netzleitstelle vermieden werden. Es ist nämlich keine Überdimensionierung für eine komplexe Kommunikations-Infrastruktur bei der lokalen Server-Computeranordnung 6 mehr nötig, da die Geräte der Niederspannungstechnik z.B. per TCP/IP direkt eingebunden werden können. In der Cloud-Infrastruktur erfolgt im dargestellten Beispiel eine Anbindung über Kommunikationseinrichtungen 40. Bevorzugt sind die Datenkommunikationsverbindungen 9 zu den Kommunikationseinrichtungen 40 derart gestaltet, dass die Datenkommunikationsverbindungen 9 aus dem Energienetz 2 jeweils an beide Orte 25, 26, d.h. an beide Rechenzentren, angebunden sind (nicht dargestellt). Dies hat den Vorteil, dass beim Ausfall eines Rechenzentrums an einem Ort das Rechenzentrum am anderen Ort nahtlos und ohne Datenverlust übernehmen kann.

Es kann jedoch auch eine indirekte Verbindung zur Cloud-Infrastruktur hergestellt werden, indem Messdaten und Betriebszustände von Geräten im Niederspannungsnetz zunächst an ein sog. "Data Management System", also eine z.B. Cloudbasierte Einrichtung zum Auswerten von Smart Meter Daten, oder an eine "remote terminal unit" Funktionalität, die in einer Cloud virtuell abgebildet wird. Von dort aus können die Daten an die Cloud-Infrastruktur der Kontrollanordnung weitergegeben werden.

Die Mittelspannungsebene 43 weist eine Schalteinrichtung 41 sowie ein Schutzgerät 42 auf, die ebenfalls per Datenkommunikationsverbindungen 9 mit der ersten Kommunikationseinrichtung 7 der lokalen Leitstelle 3 des Netzbetreibers verbunden sind. Auf diese Weise können Messdaten und Betriebszustände aus dem Energienetz an die lokale Leitstelle 3 übermittelt werden. Aus der Leitstelle 3 können Steuerbefehle an steuerbare Verbraucher 14,15, Erzeuger 13,16 oder Betriebsmittel (11,41,42) gesendet werden.

Die lokale Leitstelle 3 weist eine Server-Computeranordnung 6 auf, die über die erste Kommunikationseinrichtung 7 zur Datenkommunikation mit Geräten im Energienetz verfügt. Eine Datenspeicherressource 17 verfügt über mehrere Festplatten, die redundant als sog. "RAID" ausgebildet sind. Die Server-Computeranordnung 6 ist mit einem Desktop-Computer 4 mit Anzeigemitteln wie etwa einer Anzeigetafel oder einem Monitor 5 verbunden. Am Desktop-Computer 4 kann ein Leitstellentechniker die Kontrollanordnung 1 mit der Leitstellensoftware bedienen.

Die Server-Computeranordnung 6 weist eine Datenprozessorressource 18 auf, auf der eine zweite Gruppe 19,20,21 von Softwaremodulen lokal ausgeführt wird. Die Datenprozessorressource 18 weist dafür z.B. mehrere CPUs mit Arbeitsspeicher auf (nicht dargestellt). Bei den Softwaremodulen 19,20,21 handelt es sich um zwei Datenerfassungsmodule 19,20 und ein Konfigurationsmodul 21. Die Softwaremodule 19,20,21 weisen jeweils eine Schnittstelle 22 auf, die ebenfalls in Software ausgebildet ist und eine verschlüsselte Datenkommunikation 23 mittels einer Public-Key-Infrastruktur einsetzen.

Mittels einer zweiten Kommunikationseinrichtung 8 ist zwischen der lokalen Server-Computeranordnung 6 und einer Cloud-Infrastruktur 24 eine PKI-verschlüsselte Datenkommunikation ermöglicht.

Die Cloud-Infrastruktur 24 weist zwei Rechenzentren an zwei unterschiedlichen Orten 25,26 auf, die jeweils mit einer zweiten Kommunikationseinrichtung 8 zur PKI-verschlüsselten Datenkommunikation 23 untereinander und mit der Server-Computeranordnung 6 ausgerüstet sind und ebenfalls jeweils eine Datenspeicherressource 17 aufweisen. Jedes Rechenzentrum verfügt über eine Datenprozessorressource 18.

Der Datenprozessorressource 18 am ersten Ort 25 sind Softwaremodule 26,27,28 zugeordnet, die per Schnittstellen 22 zur PKI-verschlüsselten Datenkommunikation mit anderen Softwaremodulen ausgerüstet sind. Es handelt sich um ein Überwachungs- und Kontrollmodul 26 und zwei Berechnungsmodule für analytische Funktionen 27,28. Der Datenprozessorressource 18 am zweiten Ort 26 sind Softwaremodule 29,30,31 zugeordnet, die per Schnittstellen 22 zur PKI-verschlüsselten Datenkommunikation mit anderen Softwaremodulen ausgerüstet sind. Es handelt sich um zwei Zustandsschätzungsmodule für einen aktuellen Netzzustand 29,30 und ein Zustandsschätzungsmodul für einen zukünftigen Netzzustand 31.

Durch die Bereitstellung einer hybriden Kontrollanordnung, die teilweise lokal und teilweise zentral in der Cloud ausgebildet ist, wird einerseits eine hohe Flexibilität in Bezug auf die Skalierbarkeit und die Veränderbarkeit einzelner Funktionalitäten (Upgrades, Sicherheitspatches) erzielt und andererseits eine hohe Datensicherheit erreicht. Durch das Vorhalten von zwei Rechenzentren wird die Verfügbarkeit weiter erhöht, weil selbst bei einem Ausfall an einem Ort ein Weiterbetrieb der erforderlichen Softwaremodule an dem anderen Ort sichergestellt ist.

## Patentansprüche

1. Verfahren zum Betreiben einer Kontrollanordnung (1) für ein Energienetz (2) mit den Schritten:
- Bereitstellen einer Cloud-Infrastruktur (24) mit Datenprozessorressourcen (18) und Datenspeicherressourcen (17), und
- Bereitstellen einer ersten Gruppe (26,27,28,29,30,31) von Softwaremodulen zur Ausführung auf der Cloud-Infrastruktur (24),
**gekennzeichnet durch** die Schritte:
- Bereitstellen einer zweiten Gruppe (19,20,21) von Softwaremodulen zur lokalen Ausführung auf einer Server-Computeranordnung (6),
- Verbinden der ersten Gruppe (26,27,28,29,30,31) und der zweiten Gruppe (19,20,21) mittels Datenkommunikation (23) über Schnittstellen (22), wobei die Schnittstellen (22) eine Public-Key-Infrastruktur zur Verschlüsselung einsetzen.

2. Verfahren nach Anspruch 1,
**dadurch gekennzeichnet, dass**
für die Softwaremodule (19,20,21,26-31) mindestens eines der folgenden Software-Module verwendet werden: Datenerfassungsmodul (19,20), Datenaustauschmodul mit anderen Leitstellen, Überwachungs- und Kontrollmodul (26), Archivierungsmodul, Berechnungsmodul für analytische Funktionen (27,28), Zustandsschätzungsmodul für einen aktuellen Netzzustand (29,30), Zustandsschätzungsmodul für einen zukünftigen Netzzustand (31).

3. Verfahren nach Anspruch 1 oder 2,
**dadurch gekennzeichnet, dass**
mittels eines Konfigurationsmoduls (21) eine Auswahl von Softwaremodulen aus einer Datenbank mit Softwaremodulen erfolgt.

4. Verfahren nach Anspruch 3,
**dadurch gekennzeichnet, dass**
mittels des Konfigurationsmoduls (21) eine Zuordnung der ausgewählten Softwaremodule zur ersten oder zur zweiten Gruppe erfolgt.

5. Verfahren nach Anspruch 3 oder 4,
**dadurch gekennzeichnet, dass**
mittels des Konfigurationsmoduls (21) eine visuelle Darstellung der Softwaremodule aus der Datenbank zur Auswahl präsentiert wird.

6. Verfahren nach einem der vorhergehenden Ansprüche,
**dadurch gekennzeichnet, dass**
innerhalb der Cloud-Infrastruktur (24) Datenprozessorressourcen (18) und Datenspeicherressourcen (17) an mindestens zwei unterschiedlichen Orten (25,26) bereitgestellt werden, so dass im Fall einer Störung des Betriebs der Datenprozessorressourcen (18) und Datenspeicherressourcen (17) an einem Ort (25) ein ausfallfreier Betrieb der Kontrollanordnung an einem anderen Ort (26) sichergestellt ist.

7. Verfahren nach einem der vorhergehenden Ansprüche,
**dadurch gekennzeichnet, dass**
mittels eines Rechenlast-Softwaremoduls eine benötigte Rechenleistung und/oder ein benötigter Datenspeicherplatz für einen zukünftigen Zeitpunkt geschätzt wird, und
anhand der Schätzung zusätzliche Kopien von Softwaremodulen in der Cloud-Infrastruktur in Betrieb genommen werden.

8. Verfahren nach einem der vorhergehenden Ansprüche,
**dadurch gekennzeichnet, dass**
für die Kontrollanordnung (1) mindestens ein zusätzliches Softwaremodul zum Betreiben eines der folgenden Netze vorgesehen wird: Gas-Verteilnetz, Wasser-Verteilnetz, Abwassersystem, Stadtteil-Wärmenetz, Stadteil-Kühlungsnetz.

9. Verfahren nach einem der vorhergehenden Ansprüche, **dadurch gekennzeichnet, dass**
die Cloud-Infrastruktur (24) mehrere voneinander getrennte Anwendergruppen von Softwaremodulen gleichzeitig betreibt, wobei alle Daten einer Anwendergruppe mittels Verschlüsselung unzugänglich für Softwaremodule aller anderen Anwendergruppen verwahrt werden.

10. Kontrollanordnung (1) für ein Energienetz (2), aufweisend:
eine Cloud-Infrastruktur (24) mit Datenprozessorressourcen (18) und Datenspeicherressourcen (18), und
eine erste Gruppe (26,27,28,29,30,31) von Softwaremodulen,
die zur Ausführung auf der Cloud-Infrastruktur (24) ausgebildet sind,
**dadurch gekennzeichnet, dass**
eine zweite Gruppe (19,20,21) von Softwaremodulen zur lokalen Ausführung auf einer Server-Computeranordnung (6) ausgebildet ist,
und dass
Schnittstellen (22) ausgebildet sind, die erste Gruppe (26,27,28,29,30,31) und die zweite Gruppe (19,20,21) mittels Datenkommunikation (23) zu verbinden, wobei die Schnittstellen (22) eine Public-Key-Infrastruktur zur Verschlüsselung einsetzen.

11. Kontrollanordnung (1) nach Anspruch 10,
**dadurch gekennzeichnet, dass**
die Softwaremodule (19,20,21,26-31) mindestens eines der folgenden Software-Module aufweisen: Datenerfassungsmodul (19,20), Überwachungs- und Kontrollmodul (26), Berechnungsmodul für analytische Funktionen (27,28), Zustandsschätzungsmodul für einen aktuellen Netzzustand (29,30), Zustandsschätzungsmodul für einen zukünftigen Netzzustand (31).

12. Kontrollanordnung (1) nach Anspruch 10 oder 11,
**dadurch gekennzeichnet, dass**
die Cloud-Infrastruktur (24) ausgebildet ist, Datenprozessorressourcen (18) und Datenspeicherressourcen (18) für die Kontrollanordnung (1) an mindestens zwei unterschiedlichen Orten (25,26) bereitzustellen, so dass im Fall einer Störung des Betriebs der Datenprozessorressourcen (18) und Datenspeicherressourcen (17) an einem Ort (25) ein ausfallfreier Betrieb der Kontrollanordnung (1) an einem anderen Ort (26) sichergestellt ist.

13. Kontrollanordnung (1) nach einem der Ansprüche 10 bis 12, **dadurch gekennzeichnet, dass**
ein Rechenlast-Softwaremodul ausgebildet ist, eine benötigte Rechenleistung und/oder einen benötigten Datenspeicherplatz für einen zukünftigen Zeitpunkt zu schätzten, und dass die Cloud-Infrastruktur ausgebildet ist, anhand der Schätzung zusätzliche Kopien von Softwaremodulen in Betrieb zu nehmen.

14. Kontrollanordnung (1) nach einem der Ansprüche 10 bis 13, **dadurch gekennzeichnet, dass**
die Kontrollanordnung (1) mindestens ein zusätzliches Softwaremodul zum Betreiben eines der folgenden Netze aufweist:
Gas-Verteilnetz, Wasser-Verteilnetz, Abwassersystem, Stadtteil-Wärmenetz, Stadteil-Kühlungsnetz.

15. Kontrollanordnung (1) nach einem der Ansprüche 10 bis 14, **dadurch gekennzeichnet, dass**
die Cloud-Infrastruktur (24) ausgebildet ist, mehrere voneinander getrennte Anwendergruppen von Softwaremodulen gleichzeitig zu betreiben, wobei alle Daten einer Anwendergruppe mittels Verschlüsselung unzugänglich für Softwaremodule aller anderen Anwendergruppen verwahrt werden.
